# EUROPÄISCHE PATENTANMELDUNG

(11) **EP 2 285 142 A1**
(43) Veröffentlichungstag der Anmeldung: **16.02.2011**
(21) Anmeldenummer: 10009407.7
(22) Anmeldetag: 15.05.2006
(51) Int. Cl.: H04W 4/06, H04W 88/18

(54) **Selektive (gefilterte) Übertragung von Kommunikationsinformationen an ein mobiles Endgerät in einem Mobilfunknetz in Abhängigkeit einer Funktionszustandsinformation des mobilen Endgeräts**

(30) Priorität: 17.05.2005 DE 102005023329
(62) Teilanmeldung aus: 06009944.7
(71) Anmelder: Vodafone Holding GmbH, 40213 Düsseldorf (DE)
(72) Erfinder: Rodrigues, Bruno, 40219 Düsseldorf (DE)
(74) Vertreter: Ring & Weisbrodt

(57) **Zusammenfassung**

Die vorliegende Erfindung betrifft ein Verfahren zum Betreiben eines in Mobilfunknetzen (6) nutzbaren mobilen Endgerätes (1, 11, 19) in einem Mobilfunknetz (6), wobei seitens eines Mobilfunknetzes (6) wenigstens eine seitens des Nutzers des mobilen Endgerätes (1) vorgebbare Funktionszustandsinformation eines betriebsbereiten und im Mobilfunknetz (6) hinsichtlich des aktuellen Aufenthaltsortes in wenigstens einer Funkzelle des Mobilfunknetzes (6) registrierten mobilen Endgerätes (1) erfasst und für eine Übertragung von an das mobile Endgerät (1) gerichtete Kommunikationsinformationen (17, 18, 25, 26) genutzt wird, und wobei eine in Abhängigkeit von der Funktionszustandsinformation des mobilen Endgerätes (1) gefiltert erfolgende Übertragung von an das mobile Endgerät (1) gerichteter Kommunikationsinformationen (17, 18, 25, 26) gegeben ist. Um eine einfache und funktional umfangreiche Unterdrückung beziehungsweise Blockade des Eingangs von Kommunikationsinformationen komfortabel zu ermöglichen, werden in Abhängigkeit von der seitens des Nutzers des mobilen Endgerätes (1) vorgebbaren Funktionszustandsinformation von der Übertragung an das mobile Endgerät (1) herausgefilterte an das mobile Endgerät (1) gerichtete Kommunikationsinformationen (25, 26) seitens des Mobilfunknetzes (6) erfasst und werden in Abhängigkeit des Funktionszustandes des mobilen Endgerätes (1) entsprechend der seitens des Nutzers des mobilen Endgerätes (1) vorgebbaren Funktionszustandsinformation Kommunikationsinformationen mit bestimmten Inhalten, welche von dem Nutzer des mobilen Endgerätes (1) vorgebbar sind, zu dem mobilen Endgerät (1) übertragen, während andere in Abhängigkeit von dem Funktionszustand des mobilen Endgerätes (1) entsprechend der seitens des Nutzers des mobilen Endgerätes (1) vorgebbaren Funktionszustandsinformation seitens des Mobilfunknetzes (6) herausgefilterte Kommunikationsinformationen zumindest zunächst, das heißt während eines Bestehens des Funktionszustandes des mobilen Endgerätes (1), nicht an das mobile Endgerät (1) übertragen werden. Ferner betrifft die vorliegende Erfindung ein Mobilfunksystem mit einem zellularen Mobilfunknetz (6) mit einer eine hierarchische Zellstruktur ausbildenden Komponenten (7, 8, 9), insbesondere gemäß dem GSM- und/oder UMTS-Funknetzstandard, und mit in dem Mobilfunknetz (6) nutzbaren mobilen Endgeräten (1, 11, 19), wobei die das Mobilfunknetz (6) ausbildenden Komponenten (7, 8, 9) zur Ausführung eines erfindungsgemäßen Verfahrens ausgebildet sind. Darüber hinaus betrifft die Erfindung ein mobiles Endgerät (1) zur Nutzung in Mobilfunknetzen (6), welches zur Ausführung eines erfindungsgemäßen Verfahrens in einem erfindungsgemäßen Mobilfunksystem ausgebildet ist.

## Beschreibung

Die vorliegende Erfindung betrifft ein Verfahren zum Betreiben eines in Mobilfunknetzen nutzbaren mobilen Endgerätes in einem Mobilfunknetz. Ferner betrifft die Erfindung ein Mobilfunksystem mit ein zellulares Mobilfunknetz mit einer hierarchischen Zellstruktur ausbildenden Komponenten, insbesondere gemäß dem GSM- und/oder UMTS-Funknetzstandard, und im Mobilfunknetz nutzbaren mobilen Endgeräten, welches zur Ausführung des erfindungsgemäßen Verfahrens ausgebildet ist. Darüber hinaus betrifft die vorliegende Erfindung ein zur Ausführung des erfindungsgemäßen Verfahrens ausgebildetes mobiles Endgerät zur Nutzung in Mobilfunknetzen.

Bei dem bisher bekannten Betreiben von mobilen Endgeräten, insbesondere Mobilfunktelefonen, in zellularen Mobilfunknetzen mit einer hierarchischen Zellstruktur, insbesondere gemäß dem GSM- und/oder dem UMTS-Funknetzstandard, werden seitens betriebsbereiter und im Mobilfunknetz hinsichtlich des aktuellen Aufenthaltsortes in wenigstens einer Funkzelle des Mobilfunknetzes registrierter mobiler Endgeräte eingehende Kommunikationsinformationen wie Anrufe und/oder Mitteilungen eines Nachrichtendienstes des Mobilfunknetzes, beispielsweise SMS, MMS oder mittels sogenanntem Cellbroadcast versendete Informationen, in der Regel mit akustischen Signalen, beispielsweise sogenannten Klingeltönen, wiedergegeben, welche dem Nutzer des mobilen Endgerätes den Eingang derartiger Kommunikationsinformationen anzeigen beziehungsweise signalisieren.

Im täglichen Gebrauch entsprechender in Mobilfunknetzen nutzbarer mobiler Endgeräte sind zahlreiche Situationen gegeben, in denen die Wiedergabe von derartigen den Eingang der Kommunikationsinformationen anzeigenden akustischen Signale seitens des mobilen Endgerätes zwar störend ist beziehungsweise empfunden wird, insbesondere in Besprechungen, Vortragsveranstaltungen, Nachts während des Schlafes des Nutzers des mobilen Endgerätes oder dergleichen Situationen, allerdings ein Außerbetriebnehmen des mobilen Endgerätes, insbesondere durch ein Abschalten beziehungsweise Ausschalten des mobilen Endgerätes, aus Gründen eines wie auch immer gearteten Erreichbarkeitserfordernisses des Nutzers des mobilen Endgerätes nicht möglich beziehungsweise gewünscht ist. In der Regel ist bei in Mobilfunknetzen nutzbaren mobilen Endgeräten zu diesem Zwecke die Möglichkeit gegeben, die Wiedergabe von den Eingang von Kommunikationsinformationen anzeigenden akustischen Signalen zu unterdrücken, beispielsweise im Rahmen einer sogenannten "Stummschaltung", in der die akustische Wiedergabe von Signalen seitens des mobilen Endgerätes abgeschaltet beziehungsweise unterdrückt wird. Nachteilig bei einem Außerbetriebnehmen des mobilen Endgerätes als auch beim sogenannten "Stummschalten" desselben ist, dass der Nutzer des mobilen Endgerätes für diesen mitunter wichtige eingehende Kommunikationsinformationen nicht wahrnehmen kann. Darüber hinaus ist die Einstellbarkeit hinsichtlich einer Unterdrückung beziehungsweise Blockade des Eingangs von Kommunikationsinformationen für den Nutzer eines mobilen Endgerätes nicht beziehungsweise nur mit erheblichem Aufwand hinsichtlich entsprechender Bedieneingaben und ferner nur mit beschränktem Funktionsumfang ermöglicht.

Nachteilig ist ferner, dass im Falle einer vorübergehenden Nichterreichbarkeit eines betriebsbereiten und im Mobilfunknetz hinsichtlich des aktuellen Aufenthaltsortes in wenigstens einer Funkzelle des Mobilfunknetzes registrierten mobilen Endgerätes, beispielsweise aufgrund einer Störung und/oder Unterbrechung der Funkversorgung in einer Zelle des Mobilfunknetzes, wie sie insbesondere bei zumindest kurzfristigem Aufenthalt in einem Tunnel, einem Fahrstuhl, Keller oder dergleichen Ausfälle in der Funkversorgung aufweisenden Bereichen vorkommen können, entsprechende an das mobile Endgerät gerichtete Kommunikationsinformationen von diesem verpasst werden, da diese nicht zustellbar sind. Insbesondere bei von dem Nutzer des mobilen Endgerätes in der Regel abonnierten Kommunikationsinformationen in Form von mittels Cellbroadcast übertragenen Nachrichten eines thematisch kategorisierten Nachrichtendienstes eines Mobilfunknetzes, gehen in der Zeit der mangels Funkverbindung nicht gegebenen Erreichbarkeit des mobilen Endgerätes im Mobilfunknetz an dieses gerichtete Nachrichten verloren. Der Nutzer des mobilen Endgerätes verliert somit für ihn mitunter äußerst wichtige und für den Betreiber des Mobilfunknetzes als kostenpflichtige Leistung abrechenbare Nachrichten.

Vor diesem Hintergrund liegt der vorliegenden Erfindung die Aufgabe zugrunde, den Betrieb von in Mobilfunknetzen nutzbaren mobilen Endgeräten in Mobilfunknetzen unter Meidung der beschriebenen Nachteile derart zu verbessern, dass eine einfache und funktional umfangreiche Unterdrückung beziehungsweise Blockade des Eingangs von Kommunikationsinformationen komfortabel ermöglicht wird, insbesondere hinsichtlich weitergehender Nutzungen von Kommunikationsinformationen.

Diese Aufgabe wird durch die Merkmale der unabhängigen Ansprüche gelöst. Vorteilhafte und zweckmäßige Ausgestaltungen und Weiterbildungen ergeben sich aus den abhängigen Ansprüchen.

Der Erfindung liegt die Erkenntnis zugrunde, dass durch Nutzung einer Funktionszustandsinformation eines mobilen Endgerätes seitens des Mobilunknetzes eine umfangreichere und verbesserte Nutzung von an das mobile Endgerät gerichteter Kommunikationsinformationen ermöglicht wird. So ermöglicht eine erfindungsgemäße Nutzung von Funktionszustandsinformationen eines mobilen Endgerätes seitens des Mobilfunknetzes insbesondere eine selektive Weiterleitung von an das mobile Endgerät gerichteten Kommunikationsinformationen, beispielsweise eingehenden Anrufen und/oder Mitteilungen eines Nachrichtendienstes des Mobilfunknetzes in Abhängigkeit des Funktionszustandes des mobilen Endgerätes.

Eine besonders vorteilhafte Ausgestaltung der Erfindung ist gekennzeichnet durch eine in Abhängigkeit von der Funktionszustandsinformation des mobilen Endgerätes gefiltert erfolgende Übertragung von an das mobile Endgerät gerichteter Kommunikationsinformationen. Erfindungsgemäß ist so bereits seitens des Mobilfunknetzes in Abhängigkeit von dem Funktionszustand des mobilen Endgerätes eine selektive Übertragung von Kommunikationsinformationen an das mobile Endgerät ermöglicht. So können in Abhängigkeit des Funktionszustandes des mobilen Endgerätes vorteilhafterweise nur bestimmte Kommunikationsinformationen und/oder nur Kommunikationsinformationen von bestimmten Teilnehmern und/oder Kommunikationsinformationen mit bestimmten Inhalten, welche vorteilhafterweise von dem Nutzer des mobilen Endgerätes vorgebbar sind, vorzugsweise hinsichtlich einer Wichtigkeit für den Nutzer des mobilen Endgerätes und/oder vorgebbarer beziehungsweise einstellbarer Schlüsselwörter, durchgestellt beziehungsweise zu diesem übertragen werden, während andere in Abhängigkeit von dem Funktionszustand des mobilen Endgerätes seitens des Mobilfunknetzes herausgefilterte Kommunikationsinformationen zumindest zunächst, das heißt während eines Bestehens des Funktionszustandes, nicht an das mobile Endgerät übertragen werden. Dadurch lässt sich der Funktionsumfang einer Unterdrückung beziehungsweise Blockade des Eingangs von Kommunikationsinformationen seitens des mobilen Endgerätes weiter steigern und insbesondere den individuellen Bedürfnissen des Nutzers des mobilen Endgerätes anpassen. Vorteilhafterweise ist die Filterung einstellbar, vorzugsweise mittels wenigstens einer seitens des mobilen Endgerätes auswählbaren Filterinformation, welche beispielsweise die Rufnummer von Teilnehmern in einem Telekommunikationsnetz oder dergleichen Adressinformationen von Teilnehmern umfasst. Anhand der Filterinformation wird dann vorteilhafterweise seitens des Mobilfunknetzes bei an das mobile Endgerät gerichteten Kommunikationsinformationen erfasst, ob entsprechende Kommunikationsinformationen von diesen Teilnehmern an das mobile Endgerät in Abhängigkeit von dem Funktionszustand des mobilen Endgerätes, welcher seitens des Mobilfunknetzes vorteilhafterweise eine entsprechende Funktionszustandsinformation nutzt, übertragen werden darf. Vorteilhafterweise wird die Filterinformation mit und/oder im Zusammenhang mit der Funktionszustandsinformation des mobilen Endgerätes seitens des Mobilfunknetzes erfasst, vorteilhafterweise seitens einer den Aufbau von Kommunikationsinformationen im Mobilfunknetz steuernden beziehungsweise an einer solchen Steuerung beteiligten Recheneinrichtung, vorzugsweise einer Datenbank wie das sogenannte HLR (HLR: Home Location Register).

Gemäß einer weiteren vorteilhaften Ausgestaltung der Erfindung unterliegt die Filterung zeit-, aufenthaltsort- und/oder kommunikationsinformationsabhängigen Vorgaben. So kann der Nutzer eines mobilen Endgerätes für die Filterung von an dieses gerichtete Kommunikationsinformationen Vorgaben machen, in denen festgelegt wird, wann, wo und/oder welche Art beziehungsweise von wem er Kommunikationsinformationen erhalten möchte. So ist beispielsweise nutzerseitig vorgebbar, dass Kommunikationsinformationen diesem nicht während der Nachtzeit, Besprechungen oder dergleichen Situationen zugehen können. In einer besonders vorteilhaften Ausgestaltung der Erfindung sind entsprechende Vorgaben mit seitens des mobilen Endgerätes nutzbaren beziehungsweise genutzten Anwendungen, welche Weck- und/oder Terminplanfunktionalitäten seitens des mobilen Endgerätes realisieren, kombinierbar beziehungsweise aus diesen heraus für entsprechende zeit-, aufenthaltsort- und/oder kommunikationsinformationsabhängige Vorgaben nutzbar.

In einer weiteren vorteilhaften Ausgestaltung der Erfindung erfolgt die Filterung seitens des Mobilfunknetzes. Dazu ist vorteilhafterweise seitens des Mobilfunknetzes eine eine entsprechende Filterung ermöglichende Einrichtung vorgesehen, welche für an das mobile Endgerät gerichtete Kommunikationsinformationen entsprechende zeit-, aufenthaltsort- und/oder kommunikationsinformationsabhängige Vorgaben berücksichtigend ausgebildet ist.

In einer weiteren besonders vorteilhaften Ausgestaltung der Erfindung werden in Abhängigkeit von der Funktionszustandsinformation des mobilen Endgerätes von der Übertragung an das mobile Endgerät herausgefilterte an das mobile Endgerät gerichtete Kommunikationsinformationen seitens des Mobilfunknetzes erfasst und bei Änderung der Funktionszustandsinformation des mobilen Endgerätes vom Mobilfunknetz in Abhängigkeit von der entsprechend geänderten Funktionszustandsinformation des mobilen Endgerätes an das mobile Endgerät übertragen. Dadurch wird erfindungsgemäß die Möglichkeit geschaffen, in Abhängigkeit von dem Funktionszustand des mobilen Endgerätes von der Übertragung an dieses herausgefilterte Kommunikationsinformationen dem Nutzer des mobilen Endgerätes zu einem späteren Zeitpunkt gesammelt zukommen zu lassen. Vorteilhafterweise sind dazu seitens des Mobilfunknetzes Einrichtungen vorgesehen, die entsprechende Kommunikationsinformationen für den Nutzer des mobilen Endgerätes speichern beziehungsweise zumindest zwischenspeichern, so dass diese bei entsprechender Funktionszustandsänderung seitens des mobilen Endgerätes, beispielsweise bei einer Wiedererreichbarkeit oder dergleichen Funktionszustandsänderung, an das mobile Endgerät übertragen werden können.

Eine bevorzugte Ausgestaltung der Erfindung ist gekennzeichnet durch eingehende Anrufe und/oder eingehende Mitteilungen eines Nachrichtendienstes des Mobilfunknetzes als Kommunikationsinformationen. Der Nachrichtendienst des Mobilfunknetzes ist vorteilhafterweise ein Kurzmitteilungsdienst (SMS) oder ein Multimedia-Mitteilungsdienst (MMS). Eine weitere vorteilhafte Ausgestaltung der Erfindung sieht vor, dass der Nachrichtendienst des Mobilfunknetzes mittels WAP oder XHTML auf das mobile Endgerät übertragbare Informationen umfasst. In einer weiteren vorteilhaften Ausgestaltung der Erfindung ist der Nachrichtendienst des Mobilfunknetzes ein Rundspruchdienst, vorzugsweise ein nach Funkzellen des Mobilfunknetzes individualisierbarer Rundspruchdienst (Cellbroadcast). In einer besonders bevorzugten Ausgestaltung der Erfindung beinhaltet der Nachrichtendienst Nachrichten in verschiedenen thematischen Kategorien, wobei die Kategorien seitens des mobilen Endgerätes auswählbar und/oder vorgebbar sind. Eine konkrete Ausgestaltung der Erfindung sieht Kategorien mit ereignisgesteuerten Inhalten vor, beispielsweise Informationen über sportliche Veranstaltungen wie Spielstände von Fußballspielen oder dergleichen ereignisgesteuerter Informationen.

In einer weiteren besonders vorteilhaften Ausgestaltung der Erfindung erfolgt die Filterung eingehender Anrufe und/oder eingehender Mitteilungen eines Nachrichtendienstes des Mobilfunknetzes als Kommunikationsinformationen hinsichtlich einer Teilnehmerkennung des Anrufers und/oder Mitteilungssenders im Mobilfunknetz, vorzugsweise anhand der MSISDN (MSISDN: Mobile Subscriber ISDN (ISDN: Integrated Services Digital Network)) und/oder IMSI (IMSI: International Mobile Subscriber Identification).

Vorteilhafterweise wird die Funktionszustandsinformation des mobilen Endgerätes und/oder die Filterinformation für die Übertragung von an das mobile Endgerät gerichteter Kommunikationsinformationen zur Erfassung seitens des Mobilfunknetzes von dem mobilen Endgerät an das Mobilfunknetz übertragen, vorzugsweise mit einem Nachrichtendienst des Mobilfunknetzes, besonders bevorzugt mittels SMS. In einer weiteren vorteilhaften Ausgestaltung der Erfindung wird die Funktionszustandsinformation des mobilen Endgerätes automatisch seitens des Mobilfunknetzes erfasst, vorteilhafterweise im Rahmen der einen Verbindungsaufbau zwischen dem mobilen Endgerät und dem Mobilfunknetz initiierenden und regelnden Protokollen gemäß dem jeweiligen Funknetzstandart des Mobilfunknetzes. In einer weiteren vorteilhaften Ausgestaltung der Erfindung erfolgt die Erfassung der Funktionszustandsinformation des mobilen Endgerätes seitens des Mobilfunknetzes im Zusammenhang mit der Registrierung des aktuellen Aufenthaltsortes des mobilen Endgerätes in der wenigstens einen Funkzelle der Funkzellen des Mobilfunknetzes.

Gemäß einer weiteren besonders vorteilhaften Ausgestaltung der Erfindung wird die Funktionszustandsinformation des mobilen Endgerätes an das mobile Endgerät Kommunikationsinformationen richtenden Teilnehmern von dem Mobilfunknetz mitgeteilt. Eine weitere vorteilhafte Ausgestaltung der Erfindung sieht vor, dass die Funktionszustandsinformation des mobilen Endgerätes an das mobile Endgerät Kommunikationsinformationen richtenden Teilnehmern von dem Mobilfunknetz mitgeteilt wird, sofern Kommunikationsinformationen dieser Teilnehmer von der Übertragung an das mobile Endgerät seitens des Mobilfunknetzes herausgefiltert wurden. Vorteilhafterweise wird die Funktionszustandsinformation des mobilen Endgerätes dem jeweiligen Teilnehmer mittels eines Nachrichtendienstes des Mobilfunknetzes mitgeteilt. Die Mitteilung an den jeweiligen Teilnehmer ist dabei vorteilhafterweise einstellbar und/oder vorgebbar, vorzugsweise nutzerindividuell seitens des mobilen Endgerätes. So kann einem entsprechendem Teilnehmer vorteilhafterweise mittels eines Nachrichtensdienstes des Mobilfunknetzes, vorzugsweise mittels eines Kurzmitteilungsdienstes (SMS) oder einem Multimedia-Mitteilungsdienst (MMS), beispielsweise mitgeteilt werden, dass der entsprechend nicht erreichbare Nutzer eines mobilen Endgerätes sich derzeit in einer Besprechung befindet, schläft, nicht gestört werden will, oder dergleichen Nichterreichbarkeitsgrund gegeben ist. Dabei sind dem jeweiligen Teilnehmer vorteilhafterweise nutzerindividuelle Informationen bezüglich der Nichterreichbarkeit mitteilbar, welche der Nutzer des mobilen Endgerätes entsprechend nutzer- und/oder teilnehmerindividuell vorgeben beziehungsweise auswählen kann.

In einer weiteren vorteilhaften Ausgestaltung der Erfindung ist die Funktionszustandsinformation des mobilen Endgerätes seitens des mobilen Endgerätes einstellbar. Vorteilhafterweise erfolgt die Einstellung der Funktionszustandsinformation des mobilen Endgerätes durch Betätigung wenigstens einer Taste seitens des mobilen Endgerätes, welche vorzugsweise ausschließlich dazu funktionalisiert ist. In einer weiteren konkreten Ausgestaltung der Erfindung Verfahren weist das mobile Endgerät ein aus wenigstens zwei relativ zueinander anordbaren Gehäuseteilen bestehendes Gehäuse auf und erfolgt die Einstellung der Funktionszustandsinformation des mobilen Endgerätes durch wenigstens eine relative Bewegung der Gehäuseteile des Gehäuses zueinander zwischen wenigstens zwei Positionen, vorzugsweise durch Verschwenken, Verdrehen und/oder Verschieben der Gehäuseteile des Gehäuses zueinander. Durch diese Maßnahmen hinsichtlich der Betätigung zur Einstellung von Funktionszuständen beziehungsweise daraus ermittelbaren Funktionszustandsinformationen in Form von Signalen für das Mobilfunknetz können endgeräteseitig aufwändige Einstellungen durch Tasteneingaben in ansonsten erforderlichen aufwändigen Menüs beziehungsweise Menüführungen vorteilhafterweise entfallen, wodurch die Bedienbarkeit hinsichtlich einer erfindungsgemäßen Nutzung des Verfahrens beziehungsweise des Endgerätes weiter vereinfacht wird.

Zur technischen Lösung der eingangs genannten Aufgabe wird mit der vorliegenden Erfindung ferner ein Mobilfunksystem mit ein zellulares Mobilfunknetz mit einer hierarchischen Zellstruktur ausbildenden Komponenten, insbesondere gemäß dem GSM- und/oder UMTS-Funknetzstandard, und mit in dem Mobilfunknetz nutzbaren mobilen Endgeräten bereit gestellt, bei dem die das Mobilfunknetz ausbildenden Komponenten zur Ausführung eines erfindungsgemäßen Verfahrens ausgebildet sind.

Ferner wird zur technischen Lösung der eingangs genannten Aufgabe ein mobiles Endgerät zur Nutzung in Mobilfunknetzen bereitgestellt, welches zur Ausführung eines erfindungsgemäßen Verfahrens in einem erfindungsgemäßen Mobilfunksystem ausgebildet ist.

Vorteilhafterweise weist das mobile Endgerät ein eine Einstellung der Funktionszustandsinformation und/oder der Filterinformation ermöglichendes, seitens des mobilen Endgerätes ausführbares Anwendungsprogramm auf. In einer besonders bevorzugten Ausgestaltung der Erfindung ist ein entsprechendes Anwendungsprogramm seitens eines mobilen Endgerätes nachrüstbar, so dass bei entsprechender Funktionalität seitens des Mobilfunknetzes mobile Endgeräte durch Aufspielen eines entsprechenden Anwendungsprogramms auf diese zur erfindungsgemäßen Ausführung des Verfahrens funktionalisierbar sind.

In einer weiteren Ausgestaltung der Erfindung weist das mobile Endgerät wenigstens eine die Einstellung der Funktionszustandsinformation des mobilen Endgerätes durch Betätigung ermöglichende Taste auf, welche vorzugsweise ausschließlich dazu funktionalisiert ist. In einer bevorzugten Ausgestaltung der Erfindung weist das mobile Endgerät ein aus wenigstens zwei relativ zueinander anordbaren Gehäuseteilen bestehendes Gehäuse auf, wobei die Einstellung der Funktionszustandsinformation durch wenigstens eine relative Bewegung der Gehäuseteile des Gehäuses zueinander zwischen wenigstens zwei Positionen vornehmbar ist, vorzugsweise durch Verschwenken, Verdrehen und/oder Verschieben der Gehäuseteile des Gehäuses zueinander.

Vorteilhafterweise ist das mobile Endgerät ein in Mobilfunknetzen betreibbares Mobilfunktelefon, welches vorzugsweise wenigstens eine Anzeigeeinrichtung zur optischen und/oder akustischen Wiedergabe von Informationen und wenigstens eine Eingabeeinrichtung zur Erfassung von optischen und/oder akustischen Informationen aufweist.

Weitere Einzelheiten, Merkmale und Vorteile der Erfindung werden nachfolgend anhand des in der Figur der Zeichnung dargestellten Ausführungsbeispiels der Erfindung näher erläutert. Dabei zeigt:

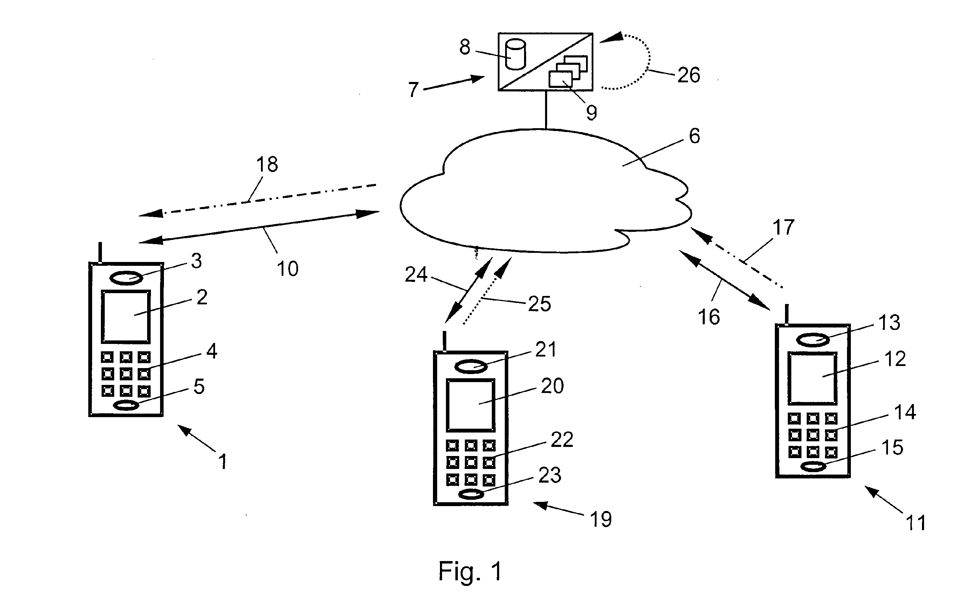

- Fig. 1: in einer Prinzipdarstellung ein erfindungsgemäßes Mobilfunksystem und ein erfindungsgemäßes mobiles Endgerät, welche zur Ausführung des erfindungsgemäßen Verfahrens ausgebildet sind.

Das in Fig. 1 gezeigte Mobilfunksystem besteht aus einem digitalen zellularen Mobilfunknetz 6 mit einer eine hierarchischen Zellstruktur ausbildenden, in Fig. 1 nicht explizit dargestellten Komponenten und aus in dem Mobilfunknetz 6 nutzbaren mobilen Endgeräten 1, 11 und 19, welche vorliegend als in dem Mobilfunknetz 6 betreibbare Mobilfunktelefone 1, 11 und 19 ausgebildet sind. Die Mobilfunktelefone 1, 11 und 19 sind vorliegend in dem Mobilfunknetz 6 zu Kommunikationszwecken nutzbar. Die Komponenten des Mobilfunknetzes 6 werden dabei von einem Mobilfunknetzbetreiber 7 unterhalten und betrieben, welche ebenfalls zu den die das Mobilfunknetz 6 ausbildenden Komponenten gehören.

Die Mobilfunktelefone 1, 11 und 19 weisen jeweils eine als Display ausgebildete optische Anzeigeeinrichtung 2, 12 beziehungsweise 20, einen Lautsprecher als akustische Anzeigeeinrichtung 3, 13 beziehungsweise 21, eine mehrere Tasten aufweisende Tastatur, welche als Eingabeeinrichtung 4, 14 beziehungsweise 22 zur Erfassung von Informationen und/oder Bedieneingaben dient, und ein als Eingabeeinrichtung zur Erfassung von akustischen Informationen dienendes Mikrofon 5, 15 beziehungsweise 23 auf.

Zur Nutzung der Mobilfunktelefone 1, 11 und 19 in dem Mobilfunknetz 6 sind diese hinsichtlich ihres aktuellen Aufenthaltsortes in den von dem Mobilfunknetz 6 bereitgestellten Funkzellen, in welchen sich die Mobilfunktelefone 1, 11 und 19 entsprechend aufhalten und eine Funkverbindung zwischen dem jeweiligen Mobilfunktelefon 1, 11 beziehungsweise 19 und dem Mobilfunknetz 6 ermöglicht ist, registriert. Die Registrierung der jeweiligen Mobilfunktelefone 1, 11 beziehungsweise 19 in den jeweiligen Funkzellen des Mobilfunknetzes 6 sind in Fig. 1 durch die mit dem Bezugszeichen 10, 16 beziehungsweise 24 versehenden Doppelpfeile symbolisch dargestellt. Die Registrierungen 10, 16 und 24 umfassen dabei die für den jeweiligen Funknetzstandard des Mobilfunknetzes 6 üblichen Informationsaustauschverbindungen und deren entsprechende Protokolle, insbesondere hinsichtlich Registrierung der Mobilfunktelefone in den jeweiligen Funkzellen des Mobilfunknetzes und deren Registrierung seitens der von dem Mobilfunknetzbetreiber 7 unterhaltenden Komponenten, insbesondere dem sogenannten HLR und/oder VLR (HLR: Home Location Register; VLR: Visitor Location Register).

Vorliegend sind die das Mobilfunknetz 6 ausbildenden Komponenten symbolisch durch seitens des Mobilfunknetzbetreibers 7 entsprechend vorgesehene Recheneinrichtungen mit Datenbanken 8, insbesondere dem HLR und/oder dem VLR, sowie seitens entsprechender Recheneinrichtungen in Form von Programmen laufenden Anwendungen 9 dargestellt. Die Recheneinrichtungen mit Datenbanken und/oder Anwendungsprogrammen 8 beziehungsweise 9 sind dabei entsprechend seitens der die Funkzellen ausbildenden Komponenten des Mobilfunknetzes 6 und deren Hilfseinrichtungen vorgesehen, beispielsweise den sogenannten Basisstationen und dergleichen Einrichtungen und/oder Komponenten des Mobilfunknetzes 6, welches vorliegend gemäß dem GSM-und/oder UMTS-Funknetzstandard ausgebildet ist.

Vorliegend sind seitens des Mobilfunknetzes 6 in entsprechenden von dem Mobilfunknetzbetreiber 7 bereitgestellten Recheneinrichtungen mit Datenbanken 8 und/oder Anwendungen 9 Funktionszustandsinformationen des betriebsbereiten und in Mobilfunknetz 6 registrierten Mobilfunktelefons 1 erfasst. Die in der Datenbank 8 mittels einer entsprechenden Anwendung 9 seitens des Mobilfunknetzbetreibers 7 des Mobilfunknetzes 6 im Rahmen der Registrierung 10 des Mobilfunktelefons 1 im Mobilfunknetz 6 erfasste Funktionszustandsinformation filtert dabei vorliegend an das Mobilfunktelefon 1 gerichtete Kommunikationsinformationen entsprechend dem von dem Nutzer des Mobilfunktelefons 1 durch die Funktionszustandsinformationen gemachten Vorgaben heraus.

In dem vorliegenden Beispiel werden dementsprechend von dem Mobilfunktelefon 11 über das Mobilfunknetz 6 an das Mobilfunktelefon 1 gerichtete Kommunikationsinformationen 17, vorliegend ein Anruf, bei entsprechender Erreichbarkeit des Mobilfunktelefons 1 im Mobilfunktelefon 6 entsprechend durchgestellt beziehungsweise übertragen, wie in Fig. 1 anhand des entsprechend mit dem Bezugszeichen 18 versehenden Pfeils dargestellt. Der Nutzer des Mobilfunktelefons 1 hat dementsprechend des von ihm gewählten Funktionszustandes beziehungsweise der entsprechend erzeugten Funktionszustandsinformation seitens des Mobilfunknetzes 6 in der Datenbank 8 beziehungsweise der Anwendung 9 die Information hinterlegt, dass von dem Mobilfunktelefon 11 kommende Anrufe als Kommunikationsinformationen 17 durchgestellt werden dürfen.

Für von dem Nutzer des Mobilfunktelefons 19 an das Mobilfunktelefon 1 über das Mobilfunknetz 6 gerichtete Kommunikationsinformationen 25 hat der Nutzer des Mobilfunktelefons 1 im Rahmen der seitens des Mobilfunknetzbetreibers 7 des Mobilfunknetzes 6 in entsprechenden Anwendungen 9 mit Datenbanken 8 zusammen mit der Funktionszustandsinformation hinterlegt, dass in dem entsprechenden Funktionszustand des Mobilfunktelefons 1 entsprechende Kommunikationsinformationen 25 des Mobilfunktelefons 19 nicht an das Mobilfunktelefon 1 übertragen, dass heißt zugestellt beziehungsweise durchgestellt werden sollen. Dementsprechend werden von dem Mobilfunktelefon 19 an das Mobilfunktelefon 1 über das Mobilfunknetz 6 gerichtete Kommunikationsinformationen seitens entsprechender Einrichtungen 8, 9 des Mobilfunknetzbetreibers 7 durch Zwischenspeichern der Kommunikationsinformationen 25 erfasst, wie in Fig. 1 anhand des mit 26 gekennzeichneten Pfeils symbolisch dargestellt.

Bei Änderung des Funktionszustandes des Mobilfunktelefons 1 und dessen Erfassung, vorliegend im Rahmen der regelmäßig erfolgenden Registrierung 10 des Aufenthaltsortes des Mobilfunktelefons 2 im Mobilfunknetz 6, wird die entsprechend zwischengespeicherte Kommunikationsinformation 26 dann von dem Mobilfunknetzbetreiber 7 beziehungsweise den entsprechenden Einrichtungen 8 beziehungsweise 9 über das Mobilfunknetz 6 übertragen und entsprechend wiedergegeben.

Die Nichtübertragbarkeit der Kommunikationsinformationen 25 an das Mobilfunktelefon 1 aufgrund des von dem Nutzer des Mobilfunktelefons 1 gewählten Funktionszustandes wird vorliegend dem Mobilfunktelefon 19 in Form einer als Kommunikationsinformation dienenden SMS von dem Mobilfunknetzbetreiber 7 beziehungsweise den entsprechenden Anwendungen 8 beziehungsweise 9 über das Mobilfunknetz 6 mitgeteilt. Vorteilhafterweise ist diese Benachrichtigung des Nutzers des Mobilfunktelefons 19 von dem Nutzer des Mobilfunktelefons 1 im Rahmen einer Vorgabe der Funktionszustandsinformationen und/oder deren Handhabung im Rahmen einer Filterung hinsichtlich des Inhaltes der Kommunikationsinformation vorgebbar beziehungsweise einstellbar. Vorteilhafterweise sind entsprechende von dem Mobilfunknetzbetreiber 7 für den Nutzer des Mobilfunktelefons 1 entsprechend an von der Übertragung an das Mobilfunktelefon 1 entsprechend dem Funktionszustand desselben herausgefilterten Kommunikationspartnern beziehungsweise deren Mobilfunktelefonen 19 als entsprechende Sonderdienstleistung des Mobilfunknetzbetreibers kostenpflichtig abrechenbar, beispielsweise als SMS.

In einer besonders bevorzugten Ausgestaltung der Erfindung wird die Berücksichtigung der Funktionszustandsinformation des Mobilfunktelefons 1 für von dem Mobilfunknetzbetreiber 7 an dieses über das Mobilfunknetz 6 übertragene, von dem Nutzer des Mobilfunktelefons 1 entsprechend abonnierte, thematisch kategorisierte Nachrichten, welche von dem Mobilfunknetzbetreiber 7 vorzugsweise mittels GPRS (GPRS: General Packet Radio Service) übertragen werden, genutzt. Hat der Nutzer des Mobilfunktelefons 1 entsprechende Nachrichtendienste des Mobilfunknetzbetreibers 7 abonniert und befindet sich das Mobilfunktelefon 1 in einem Funktionszustand, in welchem entsprechende Nachrichten des Nachrichtendienstes nicht seitens des Mobilfunktelefons 1 eingehen sollen, beispielsweise im sogenannten "Schlafmodus" beispielsweise während der Nacht, so wird entsprechend der in diesem Funktionszustand dem Mobilfunknetz 6 beziehungsweise dem Mobilfunknetzbetreiber mitgeteilten Funktionszustandsinformation des Mobilfunktelefon 1 die Übertragung entsprechender Nachrichten auf das Mobilfunktelefon 1 unterbrochen und die entsprechenden Nachrichten seitens geeigneter Anwendungen beziehungsweise Datenbanken 8 und 9 des Mobilfunknetzbetreibers 7 bis zur Änderung des entsprechenden Funktionszustandes des Mobilfunktelefons 1 zwischengespeichert, ähnlich der Zwischenspeicherung der Kommunikationsinformationen 26 des von dem Mobilfunktelefon 19 an das Mobilfunktelefon 1 gerichteten Kommunikationsinformation 25.

Bei dem vorliegend dargestellten Ausführungsbeispiel ist eine Änderung einer Funktionszustandsinformation vorteilhafterweise schon bereits bei einer vorübergehenden Nichterreichbarkeit des Mobilfunktelefons 1 im Mobilfunknetz 6 gegeben, beispielsweise wenn dieses sich vorübergehend in einem Fahrstuhl, einem Tunnel oder dergleichen Einrichtungen, Gebäude und/oder Orte befindet, in den das Mobilfunktelefon 1 keine Verbindung zu der entsprechenden Basisstation des Mobilfunknetzes 6 aufbauen kann. Eine entsprechende Erfassung dieser Funktionszustandsinformationen erfolgt dabei vorteilhafterweise im Rahmen der Registrierung 10 des Mobilfunktelefons 1 im Mobilfunknetz 6 durch entsprechendes Anmelden des Mobilfunktelefons 1 seitens der jeweiligen die Funkzellen bereitstellenden Basisstation des Mobilfunknetzes 6.

Die in der Fig. der Zeichnung dargestellten und im Zusammenhang mit dieser beschriebenen Ausführungsbeispiele der Erfindung dienen lediglich der Erläuterung der Erfindung und sind für diese nicht beschränkend.

### Bezugszeichenliste

- 1: mobiles Endgerät/Mobilfunktelefon
- 2: Anzeigeeinrichtung/Display
- 3: Anzeigeeinrichtung/Lautsprecher
- 4: Eingabeeinrichtung/Tastatur
- 5: Eingabeeinrichtung/Mikrofon
- 6: Mobilfunknetz
- 7: Mobilfunknetzbetreiber
- 8: Recheneinrichtung/Datenbank
- 9: Recheneinrichtung/Anwendung
- 10: Registrierung mobiles Endgerät (1)
- 11: mobiles Endgerät/Mobilfunktelefon
- 12: Anzeigeeinrichtung/Display
- 13: Anzeigeeinrichtung/Lautsprecher
- 14: Eingabeeinrichtung/Tastatur
- 15: Eingabeeinrichtung/Mikrofon
- 16: Registrierung mobiles Endgerät (11)
- 17: Kommunikationsinformation mobiles Endgerät (11)
- 18: Zu- bzw. Durchstellung Kommunikationsinformation (17)
- 19: mobiles Endgerät/Mobilfunktelefon
- 20: Anzeigeeinrichtung/Display
- 21: Anzeigeeinrichtung/Lautsprecher
- 22: Eingabeeinrichtung/Tastatur
- 23: Eingabeeinrichtung/Mikrofon
- 24: Registrierung mobiles Endgerät (19)
- 25: Kommunikationsinformation mobiles Endgerät (19)
- 26: Zwischenspeicherung Kommunikationsinformation (25)

## Patentansprüche

1. Verfahren zum Betreiben eines in Mobilfunknetzen (6) nutzbaren mobilen Endgerätes (1, 11, 19) in einem Mobilfunknetz (6),
wobei
seitens eines Mobilfunknetzes (6) wenigstens eine seitens des Nutzers des mobilen Endgerätes (1) vorgebbare Funktionszustandsinformation eines betriebsbereiten und im Mobilfunknetz (6) hinsichtlich des aktuellen Aufenthaltsortes in wenigstens einer Funkzelle des Mobilfunknetzes (6) registrierten mobilen Endgerätes (1) erfasst und für eine Übertragung von an das mobile Endgerät (1) gerichtete Kommunikationsinformationen (17, 18, 25, 26) genutzt wird,
und wobei
eine in Abhängigkeit von der Funktionszustandsinformation des mobilen Endgerätes (1) gefiltert erfolgende Übertragung von an das mobile Endgerät (1) gerichteter Kommunikationsinformationen (17, 18, 25, 26) gegeben ist, **dadurch gekennzeichnet, dass**
in Abhängigkeit von der seitens des Nutzers des mobilen Endgerätes (1) vorgebbaren Funktionszustandsinformation von der Übertragung an das mobile Endgerät (1) herausgefilterte an das mobile Endgerät (1) gerichtete Kommunikationsinformationen (25, 26) seitens des Mobilfunknetzes (6) erfasst werden und
in Abhängigkeit des Funktionszustandes des mobilen Endgerätes (1) entsprechend der seitens des Nutzers des mobilen Endgerätes (1) vorgebbaren Funktionszustandsinformation Kommunikationsinformationen mit bestimmten Inhalten, welche von dem Nutzer des mobilen Endgerätes (1) vorgebbar sind, zu dem mobilen Endgerät (1) übertragen werden, während andere in Abhängigkeit von dem Funktionszustand des mobilen Endgerätes (1) entsprechend der seitens des Nutzers des mobilen Endgerätes (1) vorgebbaren Funktionszustandsinformation seitens des Mobilfunknetzes (6) herausgefilterte Kommunikationsinformationen zumindest zunächst, das heißt während eines Bestehens des Funktionszustandes des mobilen Endgerätes (1), nicht an das mobile Endgerät (1) übertragen werden.

2. Verfahren nach Anspruch 1, **dadurch gekennzeichnet, dass** die Vorgabe von Kommunikationsinformationen mit bestimmten Inhalten hinsichtlich einer Wichtigkeit für den Nutzer des mobilen Endgerätes (1) und/oder hinsichtlich vorgebbarer beziehungsweise einstellbarer Schlüsselwörter erfolgt.

3. Verfahren nach Anspruch 1 oder Anspruch 2, **dadurch gekennzeichnet, dass** die Filterung zeit-, aufenthaltsort- und/oder kommunikationsinformationsabhängigen Vorgaben unterliegt und die Filterung seitens des Mobilfunknetzes (6) erfolgt.

4. Verfahren nach einem der Ansprüche 1 bis 3, **gekennzeichnet durch** eingehende Anrufe und/oder eingehende Mitteilungen eines Nachrichtendienstes des Mobilfunknetzes (6) als Kommunikationsinformationen (17, 18, 25, 26).

5. Verfahren nach Anspruch 4, **dadurch gekennzeichnet, dass** der Nachrichtendienst des Mobilfunknetzes (6) ein nach Funkzellen des Mobilfunknetzes (6) individualisierbarer Rundspruchdienst (Cellbroadcast) ist.

6. Verfahren nach Anspruch 4 oder Anspruch 5, **dadurch gekennzeichnet, dass** der Nachrichtendienst Nachrichten in verschiedenen thematischen Kategorien beinhaltet, wobei die Kategorien seitens des mobilen Endgerätes (1) auswählbar und/oder vorgebbar sind.

7. Verfahren nach einem der Ansprüche 1 bis 6, **dadurch gekennzeichnet, dass** die Funktionszustandsinformation des mobilen Endgerätes (1) zur Erfassung seitens des Mobilfunknetzes (6) von dem mobilen Endgerät (1) an das Mobilfunknetz (6) übertragen wird, vorzugsweise mit einem Nachrichtendienst des Mobilfunknetzes (6).

8. Verfahren nach einem der Ansprüche 1 bis 7, **dadurch gekennzeichnet, dass** die Erfassung der Funktionszustandsinformation des mobilen Endgerätes (1) seitens des Mobilfunknetzes (6) im Zusammenhang mit der Registrierung (10) des aktuellen Aufenthaltsortes des mobilen Endgerätes (1) in der wenigstens einen Funkzelle des Mobilfunknetzes (6) erfolgt.

9. Verfahren nach einem der Ansprüche 1 bis 8, **dadurch gekennzeichnet, dass** die Funktionszustandsinformation des mobilen Endgerätes (1) an das mobile Endgerät (1) Kommunikationsinformationen (17, 25) richtenden Teilnehmern (11, 19) von dem Mobilfunknetz (6) mitgeteilt wird.

10. Verfahren nach einem der Ansprüche 1 bis 9, **dadurch gekennzeichnet, dass** die Funktionszustandsinformation des mobilen Endgerätes (1) an das mobile Endgerät (1) Kommunikationsinformationen (17, 25) richtenden Teilnehmern (11, 19) von dem Mobilfunknetz (6) mitgeteilt wird, sofern deren Kommunikationsinformationen (17, 18) herausgefiltert wurden, wobei die Funktionszustandsinformation des mobilen Endgerätes (1) dem jeweiligen Teilnehmer (11) vorzugsweise mittels eines Nachrichtendienstes des Mobilfunknetzes (6) mitgeteilt wird und wobei die Mitteilung an den Teilnehmer (11) vorzugsweise nutzerindividuell einstellbar und/oder vorgebbar ist.

11. Mobilfunksystem mit ein zellulares Mobilfunknetz (6) mit einer hierarchischen Zellstruktur ausbildenden Komponenten (7, 8, 9), insbesondere gemäß dem GSM- und/oder UMTS-Funknetzstandard, und mit in dem Mobilfunknetz (6) nutzbaren mobilen Endgeräten (1, 11, 19), **dadurch gekennzeichnet, dass** die das Mobilfunknetz (6) ausbildenden Komponenten (7, 8, 9) zur Ausführung jedes einzelnen seitens des Mobilfunknetzes (6) durchzuführenden Verfahrensschrittes eines Verfahrens nach einem oder mehreren der Ansprüche 1 bis 10 ausgebildet sind.

12. Mobiles Endgerät (1) zur Nutzung in Mobilfunknetzen (6), **dadurch gekennzeichnet, dass** dieses zur Ausführung jedes einzelnen seitens des mobilen Endgerätes (1) durchzuführenden Verfahrensschrittes eines Verfahrens nach einem oder mehreren der Ansprüche 1 bis 10 in einem Mobilfunksystem nach Anspruch 11 ausgebildet ist.

13. Mobiles Endgerät (1) nach Anspruch 12, **dadurch gekennzeichnet, dass** dieses ein seitens des mobilen Endgerätes (1) ausführbares Anwendungsprogramm aufweist, welches eine Einstellung der Funktionszustandsinformation ermöglicht.
